# FASCICULE DE BREVET EUROPEEN

(11) **EP 3 057 686 B1**
(45) Date de publication et mention de la délivrance du brevet: **19.05.2021**
(21) Numéro de dépôt: 14793886.4
(22) Date de dépôt: 16.10.2014
(51) Int. Cl.: B01D 63/02, B01D 67/00, B01D 69/08, B01D 69/10, B01D 69/12, B01D 71/42, B01D 71/68

(54) **FABRICATION D'UNE MEMBRANE DE FILTRATION**
HERSTELLUNG EINER FILTRATIONSMEMBRAN
MANUFACTURE OF A FILTRATION MEMBRANE

(30) Priorité: 17.10.2013 FR 1360134
(43) Date de publication de la demande: 24.08.2016
(73) Titulaire: ABC Membranes, 31450 Donneville (FR)
(72) Inventeur: ABIDINE, Nouhad, 31450 Donneville (FR)
(74) Mandataire: Plasseraud IP
(86) Numéro de dépôt international: PCT/FR2014/052640
(87) Numéro de publication internationale: WO 2015/055960

(56) Documents cités:
- EP-A1- 0 761 292
- EP-A1- 0 998 972
- EP-A1- 1 733 784
- EP-A2- 1 031 526
- WO-A1-01/02085
- WO-A1-2009/083260
- WO-A1-2010/148517
- FR-A1- 2 616 812
- US-A- 4 230 463

## Description

### Domaine Technique

La présente invention concerne le domaine de la filtration membranaire et plus particulièrement la fabrication d'une membrane de filtration à fibre creuse associée à un film support.

### Arrière-plan Technologique

Un aspect important de la fabrication de ce type de membrane est lié à la qualité des surfaces intérieure et extérieure des fibres creuses et à la fragilité des membranes obtenues. De ce fait, il est en général mis en œuvre un procédé comportant des étapes particulièrement délicates pour éviter tout stress mécanique et toute dégradation physique des membranes.

### Art Antérieur

La fabrication des membranes organiques repose sur les principes de séparation de phase (sèche, humide, thermique) ou de moussage, voire même d'irradiation suivie de traitement(s) chimique(s) approprié(s). Les étapes de fabrication d'une membrane élaborée selon le principe de séparation de phase liquide-liquide sont, d'un premier abord, simples. Mais en réalité, la fabrication d'une membrane est un processus complexe car il est possible d'obtenir des membranes ayant des performances très différentes à partir d'une formulation donnée (collodion). En effet, la géométrie de la filière et/ou de la couleuse utilisée, les conditions thermiques imposées, la nature du liquide de précipitation ainsi que les conditions d'étirement sont tous des facteurs qui influencent les performances finales de la membrane.

Classiquement, la production d'une membrane sous forme de fibre creuse comporte plusieurs étapes telles que l'extrusion de la fibre, son rinçage, son conditionnement et son bobinage ou mise en faisceaux.

En général, une filière d'extrusion permet de mettre en contact un collodion avec un liquide de centrage ou de précipitation. Le collodion est amené à se repartir autour d'une aiguille de centrage dans laquelle on injecte soit un liquide de précipitation (ou de coagulation) pour former une fibre à peau interne soit un liquide de centrage pour former une fibre creuse à peau externe. Le débit et la température du collodion et du liquide interne alimentant la filière d'extrusion sont contrôlés.

Suivant ce protocole, la fibre naissante tombe dans un bain qui sert à précipiter la face externe de la fibre dans le cas d'une fibre creuse à peau externe, ou à entamer son rinçage dans le cas d'une fibre creuse à peau interne. La fibre naissante ainsi formée est entrainée vers une baie de rinçage. Le rinçage de la fibre peut être suivi d'un conditionnement qui préserve ses performances hydrauliques au cours de son séchage, étape nécessaire pour le collage de fibres. La fibre est ensuite enroulée à l'aide d'une bobine pour utilisation ultérieure ou mise directement en faisceau sous une forme spécifique.

Lorsque l'on produit une fibre creuse par une filière d'extrusion, l'état de surface de l'aiguille de centrage et, plus encore, l'état de surface du trou d'extrusion, peuvent être à l'origine de défauts majeurs qui se forment à sa surface interne et externe. L'expérience a montré que certains défauts sur la partie externe de l'aiguille de centrage n'influencent pas ou peu l'état de surface de la peau interne de la fibre. A l'opposé, il a été noté qu'un état de surface même légèrement dégradé du trou d'extrusion peut engendrer des gros défauts sur la face externe de la fibre.

La présence du moindre défaut sur le pourtour interne du trou d'extrusion d'une filière peut donc impacter la qualité de la surface de la fibre naissante de façon significative. En effet, le gonflement subi par la fibre naissante accentue l'impact des défauts qui existent sur le pourtour du trou d'extrusion. On observe alors différents types de défauts ou d'incidents de surface sur la face externe d'une fibre : empreintes rectilignes dans le sens de l'écoulement, marques de défauts et des déchirures. Il est difficile d'intervenir sur les conditions de fabrication pour minimiser l'incidence de l'état de la surface de la filière sur les défauts formés sur la face externe de la fibre. Pour corriger ce problème, il faut impérativement et constamment surfacer de nouveau la face du trou d'extrusion. Généralement, on doit changer la filière d'extrusion, ce qui augmente considérablement le coût de fabrication des membranes.

Dès la sortie de la filière, la fibre est ensuite amenée à traverser un bain de précipitation ou de rinçage dans lequel elle est en contact avec des poulies de reprise et des poulies d'entraînement assurant la continuité de l'opération de filage. La face externe d'une fibre creuse ou la face active d'une membrane plane est souvent altérée par la présence de rayures ou de bavures sur la face des organes d'entraînement qui entrent en contact avec elles. Pour cela, l'état de surface de ces éléments doit être contrôlé périodiquement et les surfaces concernées doivent être rectifiées.

A ce stade, la fibre, encore très chargée en solvant, subit un étirement dont la vitesse est supérieure à la vitesse naturelle d'extrusion afin de maîtriser la continuité du filage. Certains fabricants de membranes profitent de l'influence de l'étirement sur la structure poreuse de la membrane pour pouvoir imposer une forme particulière aux pores. Les membranes ainsi produites ont une structure semi cristalline, ce qui peut accélérer leur vieillissement et limite ainsi leur intérêt.

Selon l'état de surface des poulies et en fonction de l'étirement imposé, la fibre va donc subir des dommages qui peuvent être très importants. Des observations faites par microscopie électronique à balayage montrent que la face externe d'une fibre ou la face active d'une membrane plane est très souvent endommagée : empreintes, marques et déchirures sont présentes d'une façon régulière. Ces défauts majeurs impactent les performances de rétention des membranes ainsi produites. L'expérience a montré que ces défauts sont à l'origine d'une accélération du vieillissement chimique, mécanique ou thermique des membranes.

La production d'une membrane exempte de ce type de défauts permettrait non seulement d'améliorer ses performances initiales de séparation, mais également de lui conférer une meilleure stabilité par rapport au vieillissement chimique, thermique et mécanique.

Classiquement, la nature du bain externe a également une influence lors de la production de fibres creuses. Les fibres étant produites à des vitesses de filage comprises entre quelques mètres à quelques dizaines de mètre par minute, le temps de séjour de la fibre naissante dans l'air est très court. Plusieurs paramètres du procédé classique de fabrication de fibre creuse peuvent être adaptés afin de pallier cet inconvénient.

Il est possible de jouer sur la précipitation plus ou moins lente du collodion de manière à former une vraie peau filtrante sur la face externe de la fibre. Certains producteurs utilisent cette propriété pour produire des membranes dites « double peau ». Mais la présence de cette double barrière de filtration engendre des performances hydrauliques médiocres. De plus, comme précédemment indiqué, la présence de nombreux organes d'entraînement crée des défauts de surface qui peuvent dégrader les performances de séparation de la peau externe de la membrane.

Une autre possibilité est de faire varier les concentrations en agents porogènes. L'utilisation de collodions fortement concentrés en agents porogènes a été envisagée afin d'amener le polymère support à la limite de la séparation de phase. Ceci entraîne alors la formation de fibres creuses qui ont des perméabilités à l'eau intéressantes mais aux performances de sélectivités médiocres. En effet, ce type de membranes possède des pores filtrants qui ont une grande dispersion de taille. Souvent, ces collodions contiennent aussi des micro-gels qui sont à l'origine de nombreux défauts qui affectent la sélectivité et accélèrent le vieillissement chimique, thermique et mécanique des membranes ainsi produites.

L'utilisation de collodions à concentration limitée en agents porogènes permet d'obtenir des collodions assez stables, facteur primordial pour assurer la reproductibilité de la fabrication des membranes. Cependant, les vitesses de filage sont limitées avec de tels collodions. Pour maintenir la capacité de production, il faut donc multiplier le nombre des fibres produites en parallèle, ce qui accentue les difficultés de filage et engendre des problèmes supplémentaires.

En outre, les membranes, planes ou fibres creuses, produites avec une formulation identique ne possèdent pas les mêmes performances hydrauliques. Généralement, les membranes planes produites sur un support tissé ou non tissé ont une perméabilité à l'eau améliorée d'un facteur significatif (de 2 à 5). Une membrane plane peut ainsi présenter une perméabilité à l'eau égale à 1 000 l/h.m².bar alors qu'une fibre creuse produite dans des conditions de précipitation identiques (même collodion, même liquide de précipitation et mêmes températures) a une perméabilité à l'eau proche de 200-300 l/h.m².bar.

Le document WO2009/083260 décrit un procédé de fabrication d'une membrane de filtration à fibre creuse comprenant l'extrusion d'un collodion et d'un film support, ladite extrusion étant réalisée à l'aide d'une aiguille de centrage remplie d'un liquide.

Le document US4,230,463 décrit un procédé de fabrication d'une membrane à fibre creuse comprenant l'extrusion d'un collodion, ladite extrusion étant réalisée à l'aide d'une aiguille de centrage, et étant suivi de l'application d'un film en silicone sur la fibre creuse.

Le document EP 1 031 526 décrit un procédé d'emballage d'une membrane de filtration à fibre creuse dans un film comprenant un polymère organique.

Le document EP 1 733 784 décrit un procédé de fabrication d'une membrane de filtration à fibre creuse comprenant l'extrusion d'un collodion pour obtenir une membrane à peau interne, et l'application d'un film support.

Le document FR 2 616 812 décrit un module de filtration comprenant une pluralité de membranes planes et des espaceurs intercalés entre les membranes, et permettant de laisser percoler l'eau au travers des membranes.

Le document WO 01/02085 décrit un procédé de fabrication d'une membrane de filtration dépourvue de film support rapporté sur celle-ci.

### Résumé de l'Invention

Pour pallier tout ou partie des inconvénients de l'art antérieur précités, il est proposé un procédé de fabrication d'une membrane de filtration rapide, économe en matériaux et offrant une bonne reproductibilité. La membrane de filtration issue de ce procédé est particulièrement résistante et performante.

Plus précisément, il est proposé un procédé de fabrication d'une membrane de filtration selon la revendication 1.

Généralement, pour réussir la mise en forme de cette membrane, l'injection d'un liquide de centrage contenant un excès de solvant précède celle du collodion. Cette précaution d'emploi évite de boucher les aiguilles de centrage par remontée capillaire du collodion, nécessitant par voie de conséquence de nettoyer la filière et de recommencer le filage.

Plusieurs avantages découlent du procédé ainsi défini, comme il sera détaillé ci-dessous.

De manière traditionnelle, comme il a été expliqué en amont, la fabrication d'une fibre creuse s'accompagne généralement de multiples dégradations de la fibre elle-même, qu'elles soient dues à l'état de surface de certaines pièces de la filière d'extrusion, des poulies d'entraînement, de l'étirement des fibres ou de la nature du bain externe. Le procédé selon la présente invention permet de pallier ces inconvénients en associant à la fibre creuse un support apportant une fonction de renforcement et de protection de la fibre creuse au cours de son procédé de fabrication, ceci sans nuire à ses capacités de filtration.

Des membranes planes supportées ont déjà été décrites dans l'art antérieur. Dans ces exemples, la gestion de l'étirement de la membrane supportée se fait en tirant le support tissé ou non-tissé sur lequel on a coulé le collodion qui va former la membrane. Ce support maintient alors solidement la membrane active et amortit la transmission d'une partie des stress mécaniques qui peuvent l'affecter. Les conditions hydrodynamiques de la coulée de ce type de membrane plane peuvent ainsi être adaptées afin de minimiser le rôle de la vitesse de fabrication. La tension est, en partie, encaissée par le support, et non pas par le collodion, ce qui permet de préserver les propriétés physico-chimiques du collodion au cours du procédé de fabrication de la membrane. Cependant, la face active de la membrane plane ainsi produite est en contact avec de nombreux organes lors de son entrainement et de son rinçage. La qualité de sa face active se dégrade et de nombreux défauts affectant par voie de conséquence ses performances de filtration se forment sur cette surface.

De même, il existe des fibres creuses à peau externe qui sont renforcées par un support tressé pour consolider leur tenue mécanique radiale et longitudinale. Cependant, la peau active de ces fibres se trouve sur leurs faces externes non protégées et celles-ci sont donc considérablement dégradées par les contacts qu'elles subissent avec les différents organes servant à leurs entraînements lors de leurs fabrications. De plus, la filtration de l'extérieur vers l'intérieur des fibres creuses à peau externe est perturbée par le contact avec le support.

Grâce au procédé proposé, l'avantage dû à l'utilisation d'un support est transposé aux membranes à fibres creuses à peau interne sans subir les inconvénients qui ont été cités relativement aux membranes planes associées à un support et aux fibres creuses à peau externe associées à un support. Le fait d'avoir une membrane à fibres creuses à peau interne constituant une pluralité de canaux ainsi supportés et protégés permet de préserver les propriétés intrinsèques de la membrane résultant de la nature du collodion et d'éviter les défauts sur la face externe desdites fibres creuses à peau interne. La filtration de l'intérieur vers l'extérieur des fibres creuses à peau interne n'est pas perturbée par le contact avec le support. Cette association fibre creuse à peau interne/support permet également d'obtenir des membranes qui ont des performances améliorées par rapport à celles déjà connues. Cette nouvelle technique de production des membranes n'a, en outre, jamais été décrite ni mise en œuvre.

Le procédé permet de produire des membranes à fibres creuses à peau interne présentant une pluralité de canaux à une vitesse de filage élevée. En effet, dans le cas des fibres creuses à peau interne, la nature du bain de rinçage est un facteur primordial. Pour gérer exactement la porosité de la face externe de la fibre, il faut utiliser des mélanges eau / solvant afin de maitriser la séparation de phase qui se produit sur la face externe des fibres. Mais l'emploi de tels mélanges limite en général considérablement la vitesse de filage des fibres et nécessite l'emploi d'un bain de rinçage de très grand volume. Avec cette nouvelle forme de membranes le rapport volume poreux/surface active de filtration est minimisé car l'épaisseur de la section poreuse qui entoure le canal de filtration est considérablement réduite. La précipitation de la membrane se fait alors plus vite car elle est fonction de l'épaisseur globale de la membrane et la durée nécessaire au rinçage de la membrane est parallèlement réduite.

La mise en œuvre du procédé permet ainsi de produire une membrane contenant un ou une pluralité de canaux constitués par les fibres creuses à peau interne et supportés par au moins un film support, ce film support étant de préférence un support non-tissé. Dans un mode particulier de réalisation, ce même support peut être directement soudé à une grille de drainage qui se trouvera donc sur la face externe des membranes ainsi produites.

Les membranes poly-creuses fabriquées selon des modes de réalisation du procédé peuvent être produites en parallèle avec une filière de production d'une forme particulièrement simple et peu onéreuse.

La gamme des diamètres des canaux des fibreuses creuses ainsi produits est relativement large. On peut ainsi produire aisément des canaux ayant un diamètre compris avantageusement entre 0,6 et 1,5 mm, la gamme de diamètres pouvant être étendue de 0,2 à 3 mm.

Afin de protéger la fibre creuse naissante en sortie de la filière d'extrusion celle-ci est positionnée entre le premier et le second film support. Elle est dans ce cas immédiatement protégée des aléas des manipulations et contacts qu'elle devrait subir si ces supports n'existaient pas. Les caractéristiques du film support peuvent être choisies en fonction des performances de filtration des membranes qui doivent être produites. Il n'est donc pas nécessaire d'utiliser un support épais et robuste si la membrane est dédiée à fonctionner sous faible pression ou si le collodion de base permet de produire une membrane qui a des hautes propriétés mécaniques. Les supports peuvent être traités en fonction de la composition du collodion utilisé. En effet, il est possible de sécher ou de mouiller avec un solvant approprié au préalable le support afin de maitriser la pénétration du collodion dans son épaisseur. Ceci permet de maîtriser la liaison entre la matrice polymère de la membrane et le support poreux utilisé pour la consolider.

Par rapport à des fibres creuses produites avec des formulations identiques, la vitesse linéaire de production des membranes produites selon des modes de réalisation du procédé peut être augmentée d'environ 50 % voire plus. Ceci est dû à la diminution de l'épaisseur de la membrane devant être précipitée et formée. De ce fait, la capacité de production peut par exemple être doublée ou triplée. De plus, avec une membrane de largeur utile égale à 40 mm, il est possible, par exemple, de produire simultanément vingt à quarante canaux en parallèle. Par rapport à des conditions de production classique, la capacité de production est multipliée par un facteur compris entre 2 et 8 selon que le nombre des filaments produits en parallèle est de 16 ou 8 filaments. Avantageusement, grâce au procédé proposé, les membranes produites sont protégées, respectées et possèdent des performances de séparation rigoureusement contrôlées.

De plus, le procédé permet de supprimer l'influence de la composition du bain externe qui remplit seulement ici le rôle de bain de rinçage et qui va être le plus souvent minimisé car le rinçage des membranes va pouvoir être réalisé en les aspergeant par de l'eau à l'aide de buses d'injection.

La suite de l'opération de fabrication peut se faire selon les besoins du processus de fabrication : finir le rinçage, réaliser le conditionnement puis stocker les membranes après séchage pour produire par la suite des modules de filtration. Cette méthode de fabrication permet alors de produire de membranes tout en minimisant au mieux les pertes en matières utilisées pour produire un module ayant une surface filtrante donnée. Si les besoins de la fabrication l'exigent, les membranes en sortie du premier bain de rinçage sont envoyées vers des éléments de lavage en continu puis mises en faisceau ou enroulées en bobine. On achève alors le lavage des membranes puis leur conditionnement et séchage avant de les mettre en module pour l'opération de collage.

Dans un mode particulier de réalisation, le liquide interne peut comprendre de l'eau dégazée seule ou en mélange avec une autre substance. L'eau dégazée permet en effet d'obtenir d'excellents résultats au niveau de la mise en œuvre du procédé.

L'addition d'un solvant ou d'un autre additif dans le liquide de précipitation interne permet de réguler les caractéristiques de la peau filtrante produite selon des nombreuses publications déjà connues et appartenant aux domaines publics.

De préférence, au cours de l'étape b), le collodion et le liquide interne peuvent être amenés à une température comprise entre 30 et 60 °C. Ces températures permettent en effet une mise en œuvre optimale du procédé.

Dans un mode particulier de réalisation, le film support est par exemple un film non tissé à base de polypropylène. Ce choix s'explique par le rapport de résistance et de faible coût de revenu d'un tel support. Cependant, l'utilisation d'un support à base d'un polyester peut être conseillée selon le besoin de l'application.

De manière avantageuse, la membrane à fibre creuse à peau interne présentant une pluralité de canaux issue de la filière d'extrusion peut être mise en mouvement sous l'effet d'une force de traction appliquée sur le film support auquel elle est associée. Une telle force de traction peut, par exemple, être obtenue par un ensemble formé de deux poulies placées à chaque extrémité de la membrane. Ces poulies peuvent se trouver de chaque côté de la filière et tout près de la sortie de la membrane. Dans ce cas, les deux supports sont donc entrainés, par leurs extrémités latérales, à une vitesse constante pour passer dans un bain contenant un liquide qui entame le rinçage de la membrane mais ils peuvent aussi être aspergés par le liquide de rinçage pour minimiser le coût de réalisation de ce bain.

De manière avantageuse, une découpe de la membrane de filtration peut être réalisée à l'issue de l'étape e) de telle sorte que ladite membrane de filtration présente des faces internes obturées ou ouvertes. A sa sortie du bain de rinçage, le film peut être coupé d'une façon automatique pour débiter des membranes ayant une longueur donnée. Selon le besoin de la fabrication, l'outil de coupe permet ainsi d'obtenir des faces internes obturées ou ouvertes.

Dans un mode particulier de réalisation, le procédé de fabrication d'une membrane de filtration peut comprendre une étape supplémentaire d'écrasement de la membrane de filtration permettant de faciliter son pliage. Il est ainsi possible de laisser des zones de petite largeur sans canaux de filtration afin de permettre le pliage du film ainsi créé. L'emplacement de ces zones est choisi selon les caractéristiques géométriques du module à produire. Dans le cas d'un module plaque / cassette, la présence de ces zones n'est pas nécessaire.

Il est également proposé une membrane de filtration selon la revendication 7.

### Brève Description des Dessins

D'autres caractéristiques et avantages de l'invention apparaîtront encore à la lecture de la description qui va suivre. Celle-ci est purement illustrative et doit être lue en regard des dessins annexés parmi lesquels :
- La **figure 1** montre un exemple schématique d'un ensemble de filage permettant de mettre en œuvre un procédé classique d'extrusion,
- La **figure 2** est une vue de détail en coupe frontale d'une filière d'extrusion pour la mise en œuvre d'un procédé classique d'extrusion,
- La **figure 3** est une vue en coupe frontale d'une filière d'extrusion permettant la mise en œuvre du procédé proposé,
- La **figure 4** est une vue en coupe de profil de la filière d'extrusion représentée en figure 3 permettant la mise en œuvre du procédé,
- La **figure 5** est une vue en coupe de profil de la filière d'extrusion permettant la mise en œuvre du procédé, avec la représentation de l'application des films support,
- La **figure 6** est une vue en coupe transversale d'une membrane de filtration avec une seule ligne de canaux obtenue à l'issue du procédé selon l'invention,
- La **figure 7** est une vue en coupe transversale d'une membrane de filtration avec deux lignes de canaux obtenues à l'issue de la mise en œuvre du procédé,
- La **figure 8** est une vue en coupe transversale d'une membrane de filtration avec trois lignes de canaux obtenue à l'issue de la mise en œuvre du procédé,
- La **figure 9** est une vue en coupe transversale d'une membrane de filtration avec deux lignes de canaux de gros diamètre obtenue à l'issue de la mise en œuvre du procédé,
- La **figure 10** est une vue en coupe transversale d'une membrane de filtration avec une seule ligne de canaux et une zone tampon écrasée obtenue à l'issue de la mise en œuvre du procédé.

### Description détaillée de modes de réalisation

La description de modes de réalisation du procédé est donnée ci-après en référence à des exemples.

### Exemple 1 - Membranes à base de Polyéthersulfone (PES)

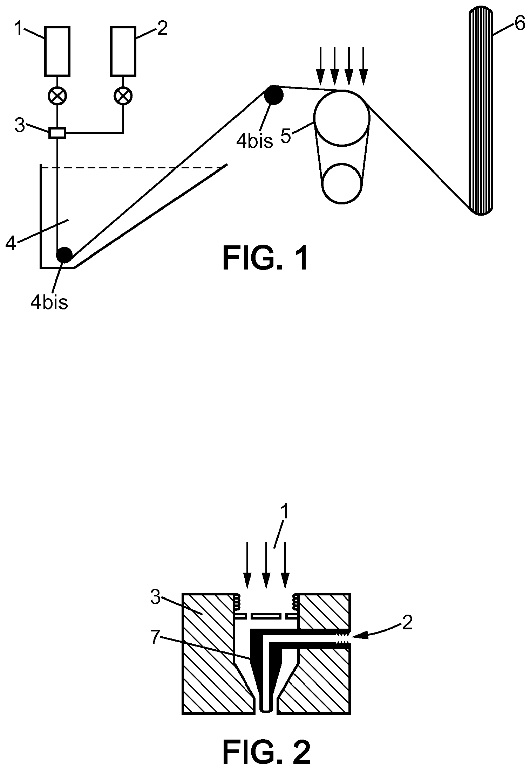

Un ensemble de filage tel que représenté sur la figure 1 peut être utilisé pour la fabrication de membranes de filtration classiques par extrusion. Un tel ensemble comprend un réservoir de collodion 1 et un réservoir de liquide interne 2 tous les deux reliés à une filière d'extrusion 3 permettant la formation d'une fibre naissante. Cette fibre naissante tombe dans un bain de précipitation 4 et, au moyen de poulies de renvoi 4 bis est dirigée vers une baie de rinçage 5 et une machine de mise en faisceau 6 qui permet son enroulement. Pour les filages expérimentaux, la machine de mise en faisceau 6 n'est pas utilisée et la fibre naissant tombe directement dans un bassin contenant de l'eau juste à la sortie de la grosse poulie de la baie de rinçage 5, qui assure son entraînement.

Pour fabriquer des membranes classiques à base de Polyéthersulfone (PES), le collodion peut être préparé à partir d'un mélange de polymère contenant 16 % de polyéthersulfone Veradel 3100P en présence de 6 % de Polyvinylpyrrolidone K30 dans de la N-méthylpyrrolidone sous agitation et sous une température maintenue à 80 °C.

Le collodion est ensuite filtré sur toile métallique (capacité de filtration de 5 microns) et transféré vers un réservoir de stockage où il est dégazé sous vide puis stocké à une température de 50 °C environ.

Le liquide interne de précipitation dans cet exemple est de l'eau dégazée sous ultrasons puis stockée avant utilisation dans un réservoir maintenu à, par exemple, 50 °C.

La fibre creuse est produite en imposant une température de 50 °C pour le collodion et le liquide interne. On utilise une filière d'extrusion spécifique afin de produire une fibre dont le diamètre interne est égal à 0,85 mm et le diamètre externe à 1,45 mm. La vitesse de filage appliquée est de 16 m/min.

La figure 2 illustre plus en détail l'écoulement du collodion 1 et du liquide interne 2 au sein de la filière d'extrusion 3. Le liquide interne 2 est injecté dans une aiguille de centrage 7 dont le conduit est positionné au cœur de la filière d'extrusion au niveau de son axe. Le conduit de la filière d'extrusion est alimenté par le collodion 1 en amont de l'aiguille de centrage 7 de sorte que le liquide interne 2 soit totalement recouvert par le collodion 1 en sortie de la filière d'extrusion.

Le bain de précipitation 4 qui assure le début du rinçage de la fibre est rempli d'eau maintenue à 40 °C. La fibre en sortie du bain est entraînée par une grosse poulie motorisée située au niveau de la baie de rinçage 5 qui la fait tomber dans un bassin rempli d'eau. Dans ce bassin, la température de l'eau est également maintenue à 40 °C ce qui assure la fin du rinçage de la fibre et donc l'élimination du solvant résiduel.

Après 24 heures de trempage dans l'eau, un long morceau de fibre est découpé pour fabriquer un module contenant 12 fibres. La longueur totale de ce micromodule est égale à 30 cm ce qui correspond à une longueur de filtration utile de 26 cm et une surface de filtration de 83 cm².

Un test initial de mesure de la perméabilité à l'eau des membranes permet de constater que les fibres ainsi obtenues sont peu perméables à l'eau. Afin de retrouver la perméabilité de ces fibres, deux solutions sont considérées :
1) trempage des fibres creuses produites dans de l'eau à 80 °C pendant 10 heures,
2) trempage des fibres creuses produites dans de l'eau à 30 °C contenant 500 ppm de NaClO (pH corrigé à 10) pendant 24 heures.

Les mesures de perméabilité à l'eau ramenée à 20 °C (Lp20) en micromodule des fibres ainsi traitées sont les suivantes :

| | Lp20 (L/h.m².bar @ 20°C) |
|---|---|
| Fibres rincées à l'eau à 80 °C pendant 10 heures | 650 |
| Fibres trempées dans de l'eau à 30 °C avec 500 ppm de NaClO (pH 10) | 720 |

L'élévation de l'indice de perméabilité à l'eau ainsi constatée est principalement due à l'élimination de la polyvinylpyrrolidone libre piégée entre les réseaux polymériques de la polyéthersulfone.

Avec le même collodion 1, il est possible de produire une membrane de filtration selon l'invention formée de 33 canaux enrobés par deux supports non-tissés qui ont les caractéristiques suivantes :
- Support non tissé à base de Polypropylène de qualité technique spécialement traité pour une utilisation en support membranaire.
- Epaisseur du support de 60 microns.
- Indice poids du support de 17 g/m².

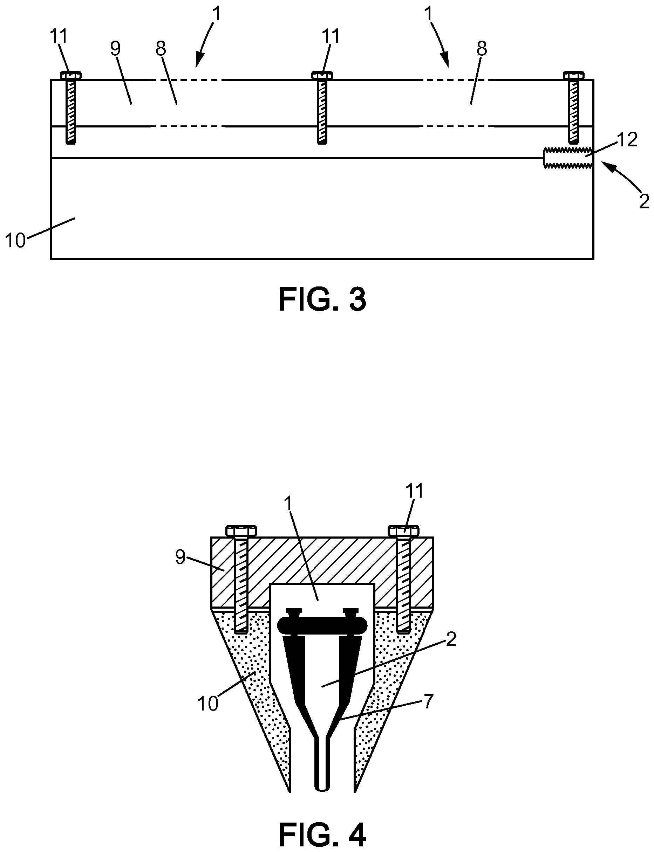

Une filière d'extrusion telle que représentée sur la figure 3 peut ainsi être utilisée dans le cadre du procédé selon la présente invention. Sur cette figure 3, on peut distinguer en coupe frontale, les orifices 8 en amont de la filière d'extrusion par lesquels s'écoule le collodion 1 au travers d'une partie supérieure 9 de la filière d'extrusion. Cette partie supérieure 9 est reliée à une partie inférieure 10 au moyen de vis 11. Le liquide intérieur 2 est injecté via des aiguilles de centrage 7 à l'intérieur de la filière d'extrusion au moyen de l'orifice latéral 12. Dans cet exemple, 33 aguilles de centrage sont réparties en une seule ligne le long de la filière d'extrusion de manière à créer une membrane de filtration dotée de 33 canaux.

La figure 4 montre, en coupe de profil, l'agencement d'une des aiguilles de centrage 7 au cœur de la filière d'extrusion, au centre de la lumière traversant ladite filière d'extrusion et par laquelle s'écoule le collodion 1.

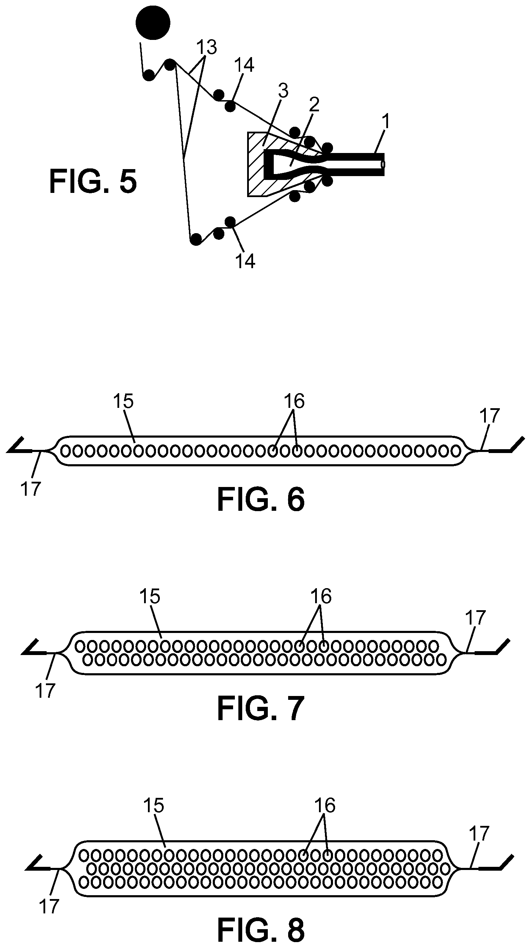

Les conditions de précipitation précédentes sont appliquées. Les conditions de débits du collodion et du liquide interne sont fixées pour produire une membrane avec des canaux de 0,85 mm de diamètre. Deux supports non-tissés (largeur utile de 35,2 mm et largeur totale de 46 mm) sont appliqués sur la membrane poly-creuse naissante afin d'obtenir une épaisseur globale de 1,38 mm, comme illustré sur la figure 6.

La figure 5 permet d'illustrer l'application des films support sur la fibre naissante aboutissant à la formation de membrane de filtration selon le procédé objet de la présente invention. Les films support 13, en l'occurrence les supports non-tissés dans cet exemple, sont déroulés et passent par diverses poulies 14 situées en périphérie de la filière d'extrusion et permettant de plaquer lesdits supports non-tissés 13 sur les parois extérieures de la fibre naissante en sortie de la filière d'extrusion. Le film support adhère immédiatement à la fibre naissante s'écoulant de la filière d'extrusion par capillarité et par l'influence de son mouillage par le solvant utilisé pour préparer le collodion.

Les deux supports non-tissés ont pour fonction de protéger les fibres constituant les canaux de la membrane selon l'invention. La membrane ainsi formée est produite à une vitesse de filage proche de 16,5 m/min. Cette membrane est alors entrainée par un jeu de deux poulies placées de deux côtés à la sortie de la filière. Cette membrane est ensuite directement glissée dans le U de deux demi-tubes aplatis préparés et posés aux deux côtés de la filière et qui sont orientés dans le sens de la sortie de la membrane. Le chemin est ainsi imposé sur une distance qui peut être modifiée en fonction de la vitesse de précipitation de la membrane. Dans le cas présent, ce chemin est de 3 m, ce qui est suffisant pour bien solidifier la membrane naissante et poursuivre les autres étapes de la fabrication. La membrane selon l'invention est ensuite entrainée vers un élément tranchant qui la découpe en des longueurs de 1,4 m qui tombent dans un bassin contenant de l'eau pour poursuivre le rinçage.

Des échantillons de ces membranes subissent les mêmes tests que précédemment et sont utilisés pour fabriquer des micromodules contenant une seule membrane de longueur utile de 26 cm (longueur totale de 30 cm et de surface de filtration de 229 cm².

Les mesures de perméabilité ramenée à 20 °C sont les suivantes :

| | Lp20 (L/h.m².bar @ 20°C) |
|---|---|
| Membrane NovaMem non traitée | +/- 0 |
| Membrane NovaMem rincées à l'eau à 80 °C pendant 10 heures | 1500 |
| Fibres trempées dans de l'eau à 30 °C avec 500 ppm de NaClO (pH 10) | 1640 |

On constate que la perméabilité à l'eau des membranes selon l'invention est plus élevée que celle des fibres creuses classiques. On constate également que la fibre creuse classique qui possède pourtant des performances mécaniques satisfaisantes (force à la rupture : 7 N - allongement à la rupture : 45 %) nécessite plus de précaution lors de sa manipulation que la membrane de filtration selon l'invention qui est protégée par le support non tissé. En outre, la membrane selon l'invention est nettement plus robuste tout en étant souple et sa manipulation se faisant par le support qui l'enrobe et qui protège ses faces externes. De plus, la maitrise de l'enrobage de la surface de contact du film support par le collodion amène à former une membrane qui a des performances liées à la composition du collodion et aux conditions opératoires appliquées lors du filage et ne dépendent plus des conditions d'entraînement appliquées qui de plus devient autrement plus respectueuses de ces mêmes performances.

Pour information, un module DN 300 de longueur de filtration utile de 1,2 m et avec un taux de remplissage de 55 % développe une surface de filtration égale à :
- 70,5 m² avec des fibres creuses classiques décrites ci-dessus.
- 73 m² avec des membranes de filtration selon l'invention produites comme ci-dessus.

Dans ces deux cas, une bague de 5 mm d'épaisseur est installée sur le pourtour interne du carter afin d'éloigner les fibres et les membranes de la surface interne du carter qui doit être collée. Dans le cas de la membrane objet de cette invention, la portée de collage par membrane est de 1,37 x 38 mm. De ce fait, seulement 693 membranes, protégées unitairement et contenant chacune 33 canaux filtrants, sont employées pour produire ce module au lieu de 22000 fibres creuses. Ceci permet de déduire le grand degré de sécurité obtenu grâce à ce nouveau mode de fabrication.

Le procédé permet donc de produire des membranes plus sûres sur le plan qualitatif et permet également de confectionner des modules de filtration qui développent une surface de filtration plus avantageuse, les canaux de filtration ainsi créés étant produits dans un espace plus réduit.

### Exemple 2 - Membranes à base de Polyacrylonitrile (PAN)

Pour fabriquer des membranes classiques à base de Polyacrylonitrile (PAN), on prépare un mélange de polymère (collodion) contenant 18 % de Polyacrylonitrile en présence de 2 % de chlorure de Lithium dans de la N-méthylpyrrolidone sous agitation et sous une température maintenue à 70 °C.

Le collodion est ensuite filtré à l'aide d'une toile métallique (capacité de filtration de 5 microns) et transféré vers un réservoir de stockage où il sera dégazé sous vide puis stocké sous une température de 40 °C.

Le liquide de précipitation est de l'eau dégazée sous ultrasons puis stockée avant utilisation dans un réservoir maintenu à 40 °C.

La fibre creuse est produite en imposant une température de 40 °C pour le collodion et le liquide interne. On utilise une filière d'extrusion spécifique afin de produire une fibre dont le diamètre interne est égal à 0,90 mm et le diamètre externe à 1,62 mm.

La vitesse de filage appliquée est égale à 18 m/min.

Le bain de rinçage externe est rempli d'eau maintenue à 40 °C. La fibre en sortie du bain est entraînée par une poulie motorisée qui la fait tomber dans un bassin rempli d'eau. Dans ce bassin, la température de l'eau est également maintenue à 40 °C ce qui assure la fin du rinçage de la fibre et donc l'élimination du solvant résiduel.

Après 24 h de trempage dans l'eau, un long morceau de fibre est découpé pour fabriquer un module contenant 12 fibres. La longueur totale de ce micromodule est égale à 30 cm ce qui correspond à une longueur de filtration utile égale à 26 cm et une surface de filtration égale à 91 cm².

La mesure de la perméabilité à l'eau en micromodule permet d'obtenir un indice de perméabilité à l'eau constant égal à 290 l/h.m².bar à 20 °C. Les fibres ainsi obtenues possèdent une force à la rupture égale à 7,6 N et un allongement à la rupture égal à 45 %. Bien que ces propriétés mécaniques en allongement paraissent satisfaisantes, la résistance à l'écrasement de ces fibres semble faible (au toucher des doigts ces fibres semblent être souples et s'écrasent vite).

Avec le même collodion, on produit une membrane de filtration selon l'invention formée de 33 canaux enrobés par deux supports non-tissé qui ont les caractéristiques suivantes :
- Support non tissé à base de Polypropylène de qualité technique spécialement traité pour une utilisation en support membranaire.
- Épaisseur du support de 95 microns.
- Indice poids du support de 34 g/m².

Les conditions de précipitations précédentes sont appliquées. Les conditions de débits du collodion et du liquide interne sont fixées pour produire une membrane avec des canaux de 0,90 mm de diamètre. Deux supports non-tissés (largeur utile de 37 mm, total de 46 mm) sont appliqués sur la membrane poly-creuse naissante afin d'obtenir une épaisseur globale de 1,49 mm. La tenue mécanique de la membrane naissante en Polyacrylonitrile n'étant pas suffisante vis à vis de l'écrasement, un support non-tissé plus épais de 95 µm a été utilisé bien qu'il soit tout à fait possible d'obtenir une membrane selon l'invention ayant des performances mécaniques satisfaisantes avec un support épais de seulement 60 microns.

Les deux supports non-tissés ont pour fonction de protéger les fibres constituant les canaux de la membrane de filtration selon l'invention. La membrane ainsi formée est produite à une vitesse de filage proche de 18 m/min. Cette membrane est alors entrainée comme dans le cas de l'exemple 1 pour être rincée et découpée en des longueurs de 1,4 m qui tombent dans un bassin contenant de l'eau pour poursuivre le rinçage.

On récupère alors des échantillons de ces membranes pour fabriquer un module de filtration qui contient une seule membrane qui a une longueur utile de 26 cm (longueur totale de 30 cm) et de surface de filtration égale à 243 cm².

Comme précédemment on réalise une mesure de la perméabilité à l'eau du module de filtration qui vient d'être produit selon l'invention pour constater que l'indice de perméabilité à l'eau de la membrane est égal à 850 l/h.m².bar à 20 °C. On constate ici que l'écart entre la perméabilité à l'eau de la membrane selon l'invention et de la membrane à fibre creuse classique est plus important en comparaison avec les fibres produites dans l'exemple 1. En effet, dans l'exemple 1 le rapport Lp_{Invention} / Lp_{Fibre} était proche de 2,3 alors que dans l'exemple présent ce même rapport est proche de 2,9.

Ceci s'explique par le fait que la vitesse de précipitation du collodion utilisé pour produire les membranes en PES est plus rapide que celle du collodion utilisé pour produire les membranes en PAN. Techniquement parlant, la fibre naissante en PAN tombe dans le bain de rinçage alors que la gélification de sa face externe n'est pas définitivement terminée ce qui fait qu'elle subit plus l'influence de ce bain de rinçage. Dans le cas de la fibre en PES, la face externe de la fibre naissante est dans un état de gélification plus avancée. Pour cela, le bain de rinçage impacte moins les performances de la fibre.

Afin d'expliquer ce phénomène, il est possible de dire que la fibre naissante doit être produite à vitesse de filage suffisamment lente pour qu'elle plonge dans le bain de rinçage seulement lorsque sa structure externe a été figée. La fabrication des membranes selon le procédé objet de l'invention nous permet d'avancer vers cet état de fait car ceci nous permet de réduire l'épaisseur de support poreux formé autour des canaux filtrant. Dans le cas des fibres creuses, l'épaisseur de la fibre doit être assez importante pour lui conférer une résistance suffisante en écrasement. Le support non tissé que nous employons présente deux avantages. Tout d'abord il permet de protéger les surfaces membranaires vis-à-vis des organes de manutention comme indiqué précédemment. En outre, il semble aussi que la diminution de l'épaisseur de la membrane obtenue selon le procédé objet de l'invention a un impact positif sur la performance en filtration de la membrane.

On peut montrer qu'un module DN 300 de longueur de filtration utile de 1,2 m et avec un taux de remplissage de 55 % développe une surface de filtration égale à :
- 60 m² avec des fibres creuses classiques décrites ci-dessus.
- 68 m² avec des membranes selon l'invention produites comme ci-dessus.

Dans ces deux cas, une bague de 5 mm d'épaisseur est installée sur le pourtour interne du carter afin d'éloigner les fibres et les membranes de la surface interne du carter qui doit être collée. Pour sa part, la portée de collage de la membrane selon l'invention est de 1,49 x 40 mm. On utilise donc 610 membranes contenant 33 canaux filtrants au lieu de près de 17600 fibres classiques.

Par contre, afin de produire les fibres creuses en PAN, le rapport de diamètre a été augmenté à 1,8 au lieu de 1,7 pour les fibres en PES. Ceci confère aux fibres en PAN une résistante à l'écrasement satisfaisante. Avec le procédé selon l'invention, il est possible de garder un rapport équivalent (1,62 pour la membrane en PES et 1,65 pour la membrane PAN). Pour la membrane selon l'invention, ce rapport est le rapport entre l'épaisseur globale de la membrane et le diamètre du canal.

### Exemple 3 - Modules de filtration

Le tableau ci-dessous donne les surfaces pouvant être développées par un module de filtration fabriqué selon l'invention, présentant un diamètre interne de 300 mm et une longueur utile de filtration égale à 1 200 mm. Trois configurations de membranes selon l'invention sont considérées :
1- Une membrane 15 telle qu'illustrée sur la figure 6, présentant une seule série de trente-trois canaux 16 (Série 1) placés entre deux couches de film support 17 de 1,5 mm d'épaisseur totale, soit un encombrement de collage de 1,5 x 40 mm. Cette membrane convient à tous les seuils de coupures potentiels allant de la microfiltration jusqu'à la nanofiltration.
2- Une membrane 15 telle qu'illustrée sur la figure 7, présentant deux séries de trente canaux 16 (Série 2) placés entre deux couches film support 17 de 2,7 mm d'épaisseur global, soit un encombrement de collage égale à 2,7 x 40 mm. Cette membrane est plus adaptée à des applications de haute ultrafiltration, d'ultrafiltration ou de nanofiltration.
3- Une membrane 15 telle qu'illustrée sur la figure 8, présentant trois séries de trente canaux 16 (Série 3) placés entre deux couches de film support 17 de 3,7 mm d'épaisseur global, soit un encombrement de collage de 3,7 x 42 mm. Cette membrane est plus adaptée à des applications d'ultrafiltration et de nanofiltration.

Les surfaces de filtration ont été calculées pour deux taux de remplissage potentiel du module (55 et 60 %), tout en réduisant de 5 mm le rayon interne du carter afin de placer une bague de centrage permettant un meilleur encollage de la plaque de tête.

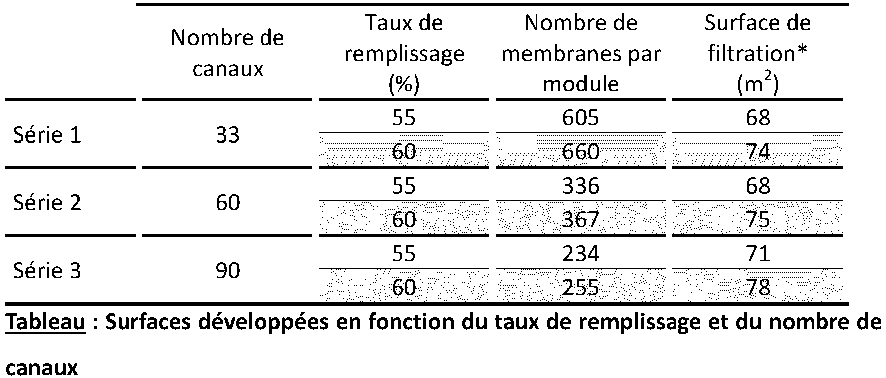

On constate tout de suite que la surface de filtration pouvant être développée avec des membranes selon l'invention dépasse de très loin celle pouvant être obtenue avec les fibres creuses classiques de même diamètre interne. Mais l'avantage de cette géométrie ne se limite pas à cet aspect. En effet, le nombre de membranes utilisées est bien limité et celles-ci présentent des fibres particulièrement bien protégées. De plus, le temps mis pour produire les membranes nécessaires pour équiper le module S3 est inférieur à 20 min, temps très faible en comparaison aux valeurs standard, et ce malgré une vitesse de filage linéaire égale à 20 m/min. Ceci se fait aussi avec le respect total de l'intégrité de la membrane puisque la surface filtrante de cette dernière ainsi que sa surface externe n'aurait été en contact avec aucun élément pouvant altérer son intégrité. De même, l'outil de production de cette nouvelle génération de membranes se limite aux organes de préparation et d'alimentation du collodion et du liquide interne de précipitation. Enfin, l'entraînement de la membrane au cours de sa fabrication peut être fait avec des organes placés à ses extrémités et qui peuvent souder les deux couches supports. Cependant, ceci n'est pas toujours nécessaire car l'écrasement de deux supports par les deux poulies d'entraînement et l'enrobage des fibres qui constituent le film support peuvent suffire pour assurer l'adhérence totale de la membrane aux supports ainsi appliqués. Enfin, le cheminement de la membrane naissante dans les deux glissières (tube aplati en forme de U) placées de part et d'autre, forme le chemin de rinçage le plus respectueux d'une membrane jamais appliqué jusqu'au présent.

### Exemple 4 - Membrane de filtration selon l'invention présentant des canaux de gros diamètres

Dans le cas de fibres creuses de gros diamètres, la tenue mécanique à l'écrasement et à l'éclatement des fibres impose une épaisseur importante. Pour une fibre de diamètre interne égal à 2.7 mm, le diamètre externe de celle-ci doit être au moins égal à 5 mm. Ceci engendre de nombreuses difficultés liées aux points suivants :
- Tout d'abord, la quantité du collodion utilisée est assez importante : pour un m² de surface utile produite on va utiliser près de 2,3 litres de collodion, hors rebut.
- La manutention de la fibre naissante est très délicate, la fibre se plie vite et peut s'aplatir à chaque moment lorsqu'elle touche un organe de manutention. On forme alors une fibre qui a une forme ovale et d'épaisseur inégale qui est très fragile en compression et en écrasement.
- La peau externe d'une telle fibre impose d'appliquer de très faible vitesse de filage afin de s'affranchir au mieux de la composition du bain de rinçage.

D'autres difficultés concernent la tenue mécanique des fibres au cours de leur utilisation. En effet, une perte minime d'intégrité d'une fibre peut facilement engendrer sa rupture par propagation (amorce de rupture), ce qui affecte la rétention de tous les produits qui doivent être arrêtés par la membrane.

A l'opposé, il est possible de produire une membrane selon l'invention équipée de nombreux canaux filtrants d'un diamètre égal à 2,7 mm et utiliser une épaisseur de paroi moindre. Ceci est possible par la présence du film support jouant le rôle d'une couche protectrice avantageusement doublée par une grille séparatrice (ici devenant un renfort) qui procure à la membrane les avantages suivants :
- La couche support et sa grille d'irrigation deviennent une couche de renfort mécanique, ce qui permet de diminuer l'épaisseur de la paroi de la membrane sans risquer de diminuer la résistance à l'écrasement de la membrane. Dans le cas présent, on utilise une couche de protection qui a une épaisseur globale égale à 0,250 mm dont 0,050 mm est assurée par la grille.

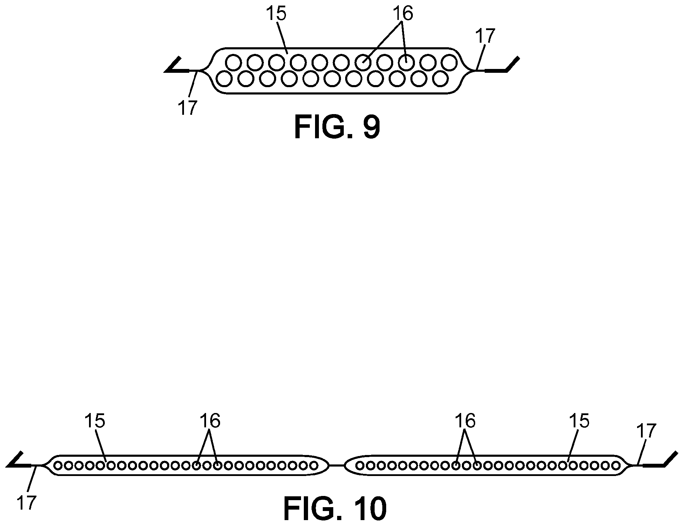

- La figure 9 présente une membrane 15 selon l'invention équipée de vingt-deux canaux 16 de 2,7 mm de diamètre. Cette membrane est réalisée avec une épaisseur globale de film support 17 de 7,7 mm et elle est large de 42 mm (portée de collage de 7,7 x 46 mm). Pour produire un m² de cette membrane, on utilise seulement 1,1 litres de collodion, hors rebut : soit une réduction égale à 52 % de la quantité de collodion remplacée en partie par le support formé en matériau moins technique mais qui permet de mieux renforcer la tenue mécanique de la membrane et sa stabilité dans le temps.

On peut noter que la durée nécessaire pour produire un m² de membrane selon l'invention est au moins divisée par deux. En effet, même si certains producteurs de membranes arrivent à produire jusqu'à 16 fibres creuses en parallèle, le procédé selon la présente invention permet d'augmenter la vitesse linéaire de production de 50 voir de 100 %. De plus, le procédé selon la présente invention respecte totalement la membrane, et plus particulièrement les fibres creuses de celle-ci, par rapport aux organes de manutention ce qui n'est pas le cas avec les autres méthodes de fabrication des membranes connues jusqu'à présent. Enfin, les canaux de la membrane constitués par les fibres creuses, ainsi formés sont parfaitement cylindriques alors que les fibres creuses de grand diamètre produites unitairement sont très souvent aplaties par le contact avec les organes d'entraînement ou ovalisées. Ce dernier détail est très important car de telles fibres déformées vieillissent très mal et finissent assez vite par générer des ruptures mécaniques qui se propagent à l'image d'un tube soudé fendu sur toute sa longueur.

### Exemple 5 - Membrane de filtration selon l'invention avec zone tampon

La figure 10 illustre une membrane selon l'invention réalisée avec une zone tampon intermédiaire. Dans cette membrane 15 formée pour l'exemple avec une seule rangée de canaux on place cinquante canaux 16 de 0,9 mm sur une largeur globale utile de film support 17 égale à 70,7 mm (soit une portée de collage de 1,5 x 75 mm). Comme précédemment, l'épaisseur de cette membrane est égale seulement à 1,5 mm, ce qui permet de développer une surface de filtration importante par unité de volume.

L'avantage de cette configuration est majeur :
1- Pour une longueur utile de filtration égale à 1,2 m, la surface de filtration pour chaque élément membranaire est égale à 0,17 m².
2- Dans un carter qui a un diamètre interne de 300 mm, on obtient facilement une surface globale de filtration comprise entre 55 et 60 m² selon le taux de remplissage appliqué (respectivement 55 et 60 %).
3- Si l'on perd en surface filtrante disponible par module, on produit les membranes qui équipent le module plus vite (+ 50 %), on gère la production avec un outil plus compacte et plus productif.
4- Pour produire un module équipé de 60 m² de surface filtrante, on manipule seulement 352 membranes bien protégées au lieu de 19200 fibres creuses autosupportées, fragiles et qui nécessitent plus de collodion.

Il existe donc de nombreuses possibilités pour produire des formes diverses qui apportent chacune des avantages spécifiques. L'intérêt majeur et incontournable du procédé selon l'invention réside dans le fait que l'on assure la production de membranes de filtration de la façon qui respecte le mieux leurs performances. Cette conception permet aussi de produire des membranes qui ont des propriétés hydrauliques et mécaniques inégalés.

## Revendications

1. Procédé de fabrication d'une **membrane de filtration à fibres creuses plane** à peau interne présentant une **pluralité de canaux** (16) en parallèle, le procédé comprenant les étapes suivantes :
a) sélectionner et préparer un collodion (1) à base de polymère organique,
b) injecter le collodion dans au moins un conduit d'une filière (3) comportant en outre un cœur de filière d'extrusion et au moins une sortie,
c) injecter un liquide interne (2) dans une pluralité d'aiguilles (7) de centrage creuses qui comportent chacune un conduit positionné au cœur de la filière d'extrusion,
d) appliquer un **premier film support** de protection (13) au niveau de la sortie de la filière d'extrusion, en déroulant le premier film support sur une face de la membrane issue de la sortie de la filière d'extrusion,
e) appliquer un **second film support** de protection au niveau de la sortie de la filière d'extrusion, en déroulant le second film support sur l'autre face de la membrane issue de la sortie de la filière d'extrusion les films de support étant de nature poreuse,
f) plonger la membrane de filtration avec les premier et second films support dans une solution de rinçage (4),
g) terminer le rinçage de la membrane de filtration à fibres creuses plane ainsi obtenue.

2. Procédé de fabrication d'une membrane de filtration selon la revendication 1, dans lequel les premier et second films support **adhèrent** immédiatement au collodion, et dans lequel la membrane issue de la filière d'extrusion est mise en mouvement sous l'effet d'une **force de traction** appliquée sur les premier et second films.

3. Procédé de fabrication d'une membrane de filtration selon la revendication 2, dans lequel la **force de** traction exercée sur les premier et second films support est appliquée sur **leurs extrémités latérales.**

4. Procédé de fabrication d'une membrane de filtration selon l'une quelconque des revendications 1 à 3, dans lequel le liquide interne comprend de **l'eau dégazée.**

5. Procédé de fabrication d'une membrane de filtration selon l'une quelconque des revendications 1 à 4, dans lequel, au cours de l'étape b/, le collodion et le liquide interne présentent une **température** comprise entre 30 et 60 °C.

6. Procédé de fabrication d'une membrane de filtration selon l'une quelconque des revendications 1 à 5, dans lequel le premier et/ou second film support est un support non tissé à base de **polypropylène.**

7. **Membrane** de filtration à fibres creuses plane présentant une pluralité de fibres creuses à peau interne délimitant respectivement une pluralité de canaux (16) de filtration en parallèle, les fibres creuses étant constituées d'un polymère organique, **caractérisée en ce qu'**elle comprend en outre un premier film support de protection et un second film support de protection rapportés sur les parois extérieures des fibres, les films support étant de nature poreuse, **caractérisée en ce qu'**elle est obtenue par la mise en œuvre du procédé de fabrication selon l'une des revendications qui précèdent.

8. Membrane de filtration selon la revendication 7, dans lequel le premier et/ou second film support (13) est un support non tissé à base de **polypropylène.**

## Patentansprüche

1. Verfahren zur Herstellung einer flachen Hohlfaser-Filtrationsmembran mit Innenhaut, die eine Mehrzahl von parallelen Kanälen (16) aufweist, das Verfahren umfassend die folgenden Schritte:
a) Auswählen und Vorbereiten eines Kollodiums (1) auf Basis eines organischen Polymers,
b) Injizieren des Kollodiums in mindestens eine Leitung einer Düse (3), die ferner einen Extrusionsdüsenkern und mindestens einen Auslass aufweist,
c) Injizieren einer inneren Flüssigkeit (2) in eine Mehrzahl von hohlen Zentriernadeln (7), die jeweils eine Leitung aufweisen, die im Kern der Extrusionsdüse positioniert ist,
d) Auftragen eines ersten Schutz-Trägerfilms (13) am Auslass der Extrusionsdüse durch Abrollen des ersten Trägerfilms auf einer Seite der Membran, die aus dem Auslass der Extrusionsdüse ausgetreten ist,
e) Auftragen eines zweiten Schutz-Trägerfilms am Auslass der Extrusionsdüse durch Abrollen des zweiten Trägerfilms auf der anderen Seite der Membran, die aus dem Auslass der Extrusionsdüse ausgetreten ist, wobei die Trägerfilme poröser Natur sind,
f) Tauchen der Filtrationsmembran mit dem ersten und zweiten Trägerfilm in eine Spüllösung (4),
g) Abschließen des Spülens der so erhaltenen Hohlfaser-Filtrationsmembran.

2. Verfahren zur Herstellung einer Filtrationsmembran nach Anspruch 1, wobei der erste und zweite Trägerfilm sofort am Kollodium haften, und wobei die Membran, die aus der Extrusionsdüse ausgetreten ist, unter der Wirkung einer Zugkraft in Bewegung versetzt wird, die auf den ersten und zweiten Film aufgebracht wird.

3. Verfahren zur Herstellung einer Filtrationsmembran nach Anspruch 2, wobei die Zugkraft, die auf den ersten und zweiten Trägerfilm ausgeübt wird, auf deren seitliche Enden aufgebracht wird.

4. Verfahren zur Herstellung einer Filtrationsmembran nach einem der Ansprüche 1 bis 3, wobei die innere Flüssigkeit entgastes Wasser umfasst.

5. Verfahren zur Herstellung einer Filtrationsmembran nach einem der Ansprüche 1 bis 4, wobei im Verlauf des Schritts b) das Kollodium und die innere Flüssigkeit eine Temperatur zwischen 30 und 60 °C aufweisen.

6. Verfahren zur Herstellung einer Filtrationsmembran nach einem der Ansprüche 1 bis 5, wobei der erste und/oder zweite Trägerfilm ein Vliesträger auf Polypropylenbasis ist.

7. Flache Hohlfaser-Filtrationsmembran mit einer Mehrzahl von Hohlfasern mit Innenhaut, die jeweils eine Mehrzahl von parallelen Filtrationskanälen (16) begrenzen, wobei die Hohlfasern von einem organischen Polymer gebildet sind, **dadurch gekennzeichnet, dass** sie ferner einen ersten Schutz-Trägerfilm und einen zweiten Schutz-Trägerfilm umfasst, die auf den Außenwänden der Fasern angebracht sind, wobei die Trägerfilme poröser Natur sind, **dadurch gekennzeichnet, dass** sie durch die Durchführung des Herstellungsverfahrens nach einem der vorhergehenden Ansprüche erhalten wird.

8. Filtrationsmembran nach Anspruch 7, wobei der erste und/oder zweite Trägerfilm (13) ein Vliesträger auf Polypropylenbasis ist.

## Claims

1. Method for manufacturing a flat hollow fiber filtration membrane having an inner skin comprising a plurality of channels in parallel, le method comprising the following steps:
a) selecting and preparing an organic polymer-based collodion (1),
b) injecting the collodion into at least one channel of a spinneret (3) that further comprises an extrusion spinneret core and at least one outlet,
c) injecting an internal liquid (2) into a plurality of hollow centering needles (7) each comprising a channel positioned at the core of the extrusion spinneret,
d) applying a first protective support film (13) at the outlet of the extrusion spinneret, by unrolling the first support film onto a face of the membrane emerging from the outlet of the extrusion spinneret,
e) applying a second protective support film at the outlet of the extrusion spinneret, by unrolling the second support film onto the other face of the membrane emerging from the outlet of the extrusion spinneret, the support films being of porous nature,
f) immersing the filtration membrane with the first and second support films in a rinsing solution (4),
g) ending the rinsing of the planar hollow fiber filtration membrane thus obtained.

2. Method for manufacturing a filtration membrane according to claim 1, wherein the first and second support film immediately adhere to the collodion, and wherein the membrane exiting the extrusion spinneret is set in motion by the effect of a tractive force applied to the first and second support films.

3. Method for manufacturing a filtration membrane according to claim 2, wherein the tractive force applied to the first and second support films is applied on their lateral ends.

4. Method for manufacturing a filtration membrane according to any one of claims 1 to 3, wherein the internal liquid comprises degassed water.

5. Method for manufacturing a filtration membrane according to any one of claims 1 to 4, wherein, during step b/, the collodion and the internal liquid have a temperature of between 30 and 60°C.

6. Method for manufacturing a filtration membrane according to any one of claims 1 to 5, wherein the first and/or second support film is a nonwoven polypropylene-based support.

7. Filtration membrane with flat hollow fiber having a plurality of hollow fibers having an inner skin delimiting respectively a plurality of filtration channels (16) in parallel, the hollow fibers being constituted by an organic polymer, **characterized in that** it further comprises a first protective support film and a second protective support film applied to the outer walls of the fibers, the support films being of porous nature, **characterized in that** it is obtained by implementation of the manufacturing method according to any of the preceding claims.

8. Filtration membrane according to claim 7, wherein the first and/or second support film (13) is an unwoven polypropylene-based support.
